# EUROPÄISCHE PATENTSCHRIFT

(11) **EP 2 040 039 B1**
(45) Veröffentlichungstag und Bekanntmachung des Hinweises auf die Patenterteilung: **26.06.2013**
(21) Anmeldenummer: 08104832.4
(22) Anmeldetag: 22.07.2008
(51) Int. Cl.: G01C 21/36, G08G 1/0968, G01C 21/32

(54) **Routenbereitstellungsvorrichtung sowie Verfahren zum Betreiben einer solchen**
Device for and method of providing routes
Dispositif et procédé pour fournir des routes

(30) Priorität: 20.09.2007 DE 102007044989
(43) Veröffentlichungstag der Anmeldung: 25.03.2009
(73) Patentinhaber: Robert Bosch GmbH, 70442 Stuttgart (DE)
(72) Erfinder: Andres, Sascha, 31137, Hildesheim (DE); Braun, Arnd, 31141, Hildesheim (DE); Garrelts, Mathias, 31188, Holle (DE); Hannemann, Dirk, 31139, Hildesheim (DE); Horstkotte, Michael, 37520, Osterode (DE)

(56) Entgegenhaltungen:
- DE-A1- 10 029 198
- DE-A1-102004 009 463

## Beschreibung

### Technisches Gebiet

Die Erfindung betrifft eine Routenbereitstellungsvorrichtung, insbesondere eine Navigationseinheit, der Navigationsdaten von Massendatenträgern, wie z.B. optischen Datenträgern, wie z.B. CD, DVD, zur Verfügung gestellt werden.

### Stand der Technik

Bei modernen Navigationsgeräten ist es möglich, Navigationsdaten von Massenspeicher, wie z.B. optischen Datenträgern, z.B. CD, DVD, auf interne Speicher" wie z.B. wiederbeschreibbare Speicherkarten, z.B. in Form einer SD-Karte, zu kopieren. Die Verwendung von internem Speicher in Navigationsgeräten hat den Vorteil, dass sich aufgrund der deutlich geringeren Größe der Speicherkarten im Vergleich zu dem Massenspeicher auch mobile Navigationsgeräte in sehr kompakter Bauweise realisieren lassen. Während jedoch auf einem derartigen Massenspeicher eine große Datenmenge für Navigationsdaten von mehreren Ländern gespeichert werden kann, ist der Speicherplatz der wiederbeschreibbaren Speicherkarte in der Regel begrenzt. Daher können in der Regel in dem internen Speicher nur Navigationsdaten von bestimmten Regionen bzw. Ländern gespeichert werden. Die in dem internen Speicher gespeicherten Regionen können von dem Navigationsgerät genutzt werden, um Routen innerhalb des durch die darauf gespeicherten Regionen definierten geografischen Bereichs zu berechnen.

Aufgrund des begrenzten Speicherplatzes werden zur Vorbereitung eines Einsatzes des Navigationsgerätes für eine längere Route die benötigten Regionen in den internen Speicher kopiert. Dabei wählt der Benutzer in der Regel aus der Liste aller verfügbaren Regionen manuell die benötigten zu kopierenden Regionen aus, durch die sein Weg von einem Startort zu einem Zielort voraussichtlich führt. Wenn ein Benutzer mehrere Regionen für eine längere, mehrere Regionen betreffende Route zum Schreiben in den internen Speicher auswählen soll, muss er in der Regel über geografische Kenntnisse verfügen, d.h. er muss in etwa wissen durch welche Regionen die geplante Route führt. So muss er z.B. wissen, dass die Fahrt von Dänemark nach Italien auch durch Deutschland und Österreich führt. Bei fehlenden geographischen Kenntnissen kann das unter Umständen dazu führen, das falsche Regionen ausgewählt werden und das Navigationsgerät somit nur Routen durch die ausgewählten Routen bestimmt, die einen erheblichen Umweg darstellen können.

Alternativ ist in der Druckschrift DE 10 2004 009 463 A1 ein Verfahren zum Speichern von Verkehrswegeabschnitte repräsentierenden Kartendaten in einem Navigationssystem vorgeschlagen, wobei nur Kartendaten innerhalb eines Korridors um eine Fahrroute in einem Speicher des Navigationssystems abgelegt werden. Die Kartendaten innerhalb des Korridors werden vor der Speicherung im Navigationssystem automatisch selektiert.

Weiterhin ist z.B. aus der Druckschrift DE 100 29 198 A1 ein Verfahren zur Auswahl von Karteninformationen aus einer digitalen Karte ausgehend von einem vorgegebenen Polygonzug auf der digitalen Karte bekannt, wobei die ausgewählten Karteninformationen zusätzlich zu den durch den Polygonzug definierten Informationen in Abhängigkeit wenigstens eines Parameters einen Routenkorridor umfassen.

Es ist Aufgabe der vorliegenden Erfindung, einen Benutzer bei der manuellen Auswahl der Regionen, die auf eine internen Speicher eines Navigationsgeräts geschrieben werden sollen, zu unterstützen.

### Offenbarung der Erfindung

Diese Aufgabe wird durch das Verfahren zum Betreiben einer Routenbereitstellungsvorrichtung gemäß Anspruch 1 sowie durch die Routenbereitstellungsvorrichtung gemäß dem nebengeordneten Anspruch gelöst.

Vorteilhafte Ausgestaltungen der Erfindung sind in den abhängigen Ansprüchen angegeben.

Gemäß einem ersten Aspekt ist ein Verfahren zum Betreiben einer Routenbereitstellungsvorrichtung mit einem internen Speicher zum Speichern von Navigationsdaten vorgesehen. Das Verfahren umfasst die Schritte des Ermittelns einer oder mehrerer Routen abhängig von einer bereitgestellten Routeninformation gemäß einem Routenbestimmungsverfahren; des Bestimmens von Routenregionen, durch die die eine oder mehreren ermittelten Routen führen; des Ausgebens der Routenregionen zur Auswahl an einen Benutzer; des Erhaltens einer Auswahlinformation von dem Benutzer; sowie des Kopierens von Navigationsdaten, die den entsprechend der Auswahlinformation ausgewählten Regionen zugeordnet sind, von einem externen Speicher in den internen Speicher der Routenbereitstellungsvorrichtung.

Ein derartiges Verfahren hat den Vorteil, dass eine Routenbereitstellungsvorrichtung lediglich mit einem internen Speicher betrieben werden kann, wobei ein die Navigationsdaten üblicherweise speichernde externe Speicher, z.B. ein Massenspeicher, für andere Anwendungen zur Verfügung steht bzw. wobei die Routenbereitstellungsvorrichtung ohne den angeschlossenen Massenspeicher in verbesserter Weise als mobiles Gerät nutzbar ist. Weiterhin ist es vorteilhaft, dass dem Benutzer die für die geplante Route benötigten Regionen in der Routenbereitstellungsvorrichtung zur Auswahl bereitgestellt werden, so dass der Benutzer die gewünschten Regionen, die in dem internen Speichers der Routenbereitstellungsvorrichtung gespeichert werden sollen, manuell auswählen kann. Dadurch kann der Benutzer ohne Weiteres anhand der bereitgestellten Auswahl erkennen, welche Regionen in die Routenbereitstellungsvorrichtung geladen werden müssen, ohne über geografische Kenntnisse verfügen zu müssen.

Weiterhin können eine oder mehrere Umgebungsregionen ermittelt werden, die in einem bestimmten Umkreis um die ermittelten eine oder mehreren Routen liegen, wobei die eine oder mehreren Umgebungsregionen zur Auswahl an den Benutzer ausgegeben werden. Insbesondere kann der bestimmte Umkreis abhängig von einem bereitgestellten Umkreiswert oder von einem verfügbaren Speicherplatz des internen Speichers festgelegt wird.

Gemäß einer Ausführungsform können dem Benutzer die auswählbaren Regionen als auswählbare Flächen, die die auswählbaren Regionen grafisch darstellen, oder als auswählbaren Text, der Regionenbezeichnungen angibt, ausgegeben werden.

Dem Benutzer kann in der Auswahlinformation weiterhin eine Auswahloption ausgegeben werden, durch die eine Auswahl aller bestimmten Routenregionen oder einer Gruppe eines Teils der der Routenregionen ermöglicht wird.

Weiterhin können in dem internen Speicher befindliche Navigationsdaten, die nicht den bestimmten Routenregionen zugeordnet sind, vor dem Kopieren gelöscht werden

Gemäß einer Ausführungsform können die eine oder die mehreren Routen abhängig von der bereitgestellten Routeninformation anhand von in der Routenbereitstellungsvorrichtung bereitgestellten Navigationsdaten ermittelt werden, wobei die bereitgestellten Navigationsdaten ein die Regionen übergreifendes ausgedünntes Wegstreckennetz beschreiben.

Gemäß einem weiteren Aspekt umfasst eine Routenbereitstellungsvorrichtung eine Ausgabeeinrichtung und einen internen Speicher zum Speichern von Navigationsdaten, wobei die Routenbereitstellungsvorrichtung ausgebildet ist, um eine oder mehrere Routen abhängig von einer bereitgestellten Routeninformation gemäß einem Routenbestimmungsverfahren zu ermitteln, um Routenregionen, durch die die eine oder mehrere ermittelten Routen führen, zu bestimmen, um die Routenregionen zur Auswahl an einen Benutzer auszugeben, um eine Auswahlinformation von dem Benutzer zu erhalten, und um Navigationsdaten, die den entsprechend der Auswahlinformation ausgewählten Regionen zugeordnet sind, von einem verbundenen oder verbindbaren externen Speicher in den internen Speicher der Routenbereitstellungsvorrichtung zu kopieren.

Es kann vorgesehen sein, dass mit Hilfe einer Eingabeeinrichtung und der Ausgabeeinrichtung die Routenregionen zum Kopieren durch einen Benutzer auswählbar sind.

Weiterhin kann die Ausgabeeinrichtung die auszuwählenden Routenregionen sowie alle übrigen verfügbaren Regionen in grafisch unterschiedlicher Darstellung ausgeben.

Gemäß einem weiteren Aspekt ist ein Computerprogramm vorgesehen, das einen Programmcode enthält, der, wenn er auf einer Datenverarbeitungseinheit ausgeführt wird, das obige Verfahren ausführt.

### Kurzbeschreibung der Zeichnungen

Bevorzugte Ausführungsformen der Erfindung werden nachfolgend anhand der beigefügten Zeichnungen näher erläutert. Es zeigen:
Fig. 1 eine schematische Darstellung einer Routenbereitstellungsvorrichtung gemäß einer ersten Ausführungsform der Erfindung; und
Fig. 2 einen Kartenausschnitt für Europa, auf dem auswählbare Regionen bzw. Länder farblich hinterlegt sind.

### Beschreibung der Ausführungsformen

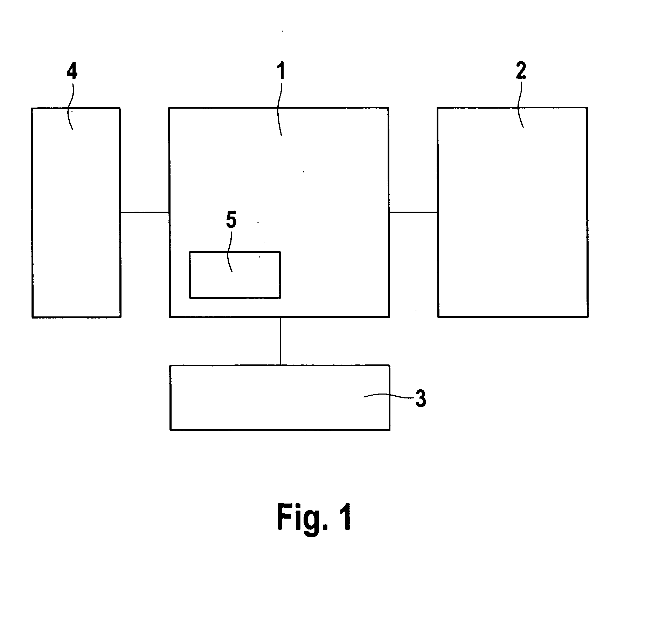

In Fig. 1 ist schematisch eine Routenbereitstellungsvorrichtung gemäß einer Ausführungsform der Erfindung dargestellt. Die Routenbereitstellungsvorrichtung weist eine Navigationseinheit 1 auf, die einem Benutzer über eine Anzeigevorrichtung 2 geografische Angaben, wie z.B. einer Umgebungskarte einer bestimmten Position, eine ausgewählte Wegstrecke und dgl. sowie Anweisungen über die einzuschlagende Fahrtrichtung ausgeben kann. Weiterhin kann die Navigationseinheit 1 mit einem Eingabegerät 3 zum Eingeben von geografischen Routeninformationen verbunden sein, z.B. zum Definieren von Start- und/oder Zielorten einer von der Navigationseinheit 1 zu berechnenden Wegstrecke, weitere Parameter für die Streckenermittlung, wie z.B. Meidung von bestimmten Straßen, Zeitoptimierung, Streckenlängenoptimierung usw. Die Eingabevorrichtung 3 ist z.B. als ein Tastenfeld, eine Tastatur oder dgl. ausgebildet. Alternativ können Anzeigevorrichtung und Eingabevorrichtung auch integriert ausgeführt sein, wobei eine Benutzereingabe beispielsweise über einen Touchscreen vorgenommen werden kann.

Die Navigationseinheit 1 ist mit einem Massenspeicher 4 verbunden bzw. verbindbar. Der Massenspeicher 1 kann beispielsweise einen optischen Massenspeicher, wie z.B. eine CD-ROM oder DVD umfassen, die z.B. in ein CD-Laufwerk bzw. in ein DVD-Laufwerk eingelegt bzw. einlegbar ist. Auf dem optischen Massenspeicher 4 sind geografische Daten, wie z.B. Straßenkarten von bestimmten Regionen, wie z.B. Ländern usw. und entsprechende Ortsbezeichnungen, in Form von Wegstreckenabschnitten gespeichert, so dass die Navigationseinheit 1 mithilfe der in dem Massenspeicher 4 verfügbaren Daten eine Suche nach Orten, Regionen und anderen geografischen Punkten oder Bereichen sowie eine Routenermittlung durchführen kann und einem Benutzer entsprechende Navigationsanweisungen bereitstellen kann.

Damit die Navigationseinheit 1 z.B. eine Routenplanung oder eine Umkreisanzeige auch unabhängig von dem Massenspeicher 4 vornehmen kann, enthält die Navigationseinheit 1 einen internen Speicher 5, der beispielsweise als flüchtiger oder nichtflüchtiger Speicher ausgebildet sein kann und fest integriert oder auswechselbar mit der Navigationseinheit 1 verbunden sein kann. Im Falle eines auswechselbaren Speichers kann dies beispielsweise durch eine SD-Karte oder eine sonstige bekannte Speicherkarte realisiert sein. Ein von dem Massenspeicher 4 unabhängiger Betrieb der Navigationseinheit 1 ist beispielsweise dann zweckmäßig, wenn die Navigationseinheit 1 mobil verwendet werden soll und ein oftmals großer und sperriger Massenspeicher 4 dazu nicht geeignet wäre. Weiterhin ist ein Zugriff auf die Daten in einem internen Speicher in der Regel schneller, so dass unnötige Wartezeiten für den Benutzer vermieden werden können. Weiterhin kann es bei einem fest installierten System sinnvoll sein, den Massenspeicher 4 für andere Anwendungen zu verwenden. Z.B. kann im Falle eines CD- oder DVD-Laufwerks der Massenspeicher verwendet werden, um Musik- oder Video-CDs bzw. DVDs abzuspielen.

Der begrenzte Speicherplatz des internen Speichers 5 führt dazu, dass eine Vorauswahl der für die Routenplanung zu berücksichtigenden Regionen vorgenommen werden muss. Eine solche Vorauswahl kann, wie aus dem Stand der Technik bekannt, automatisch vorgenommen werden. Es ist jedoch manchmal wünschenswert, dem Benutzer die endgültige Entscheidung über die in dem internen Speicher bereitzustellenden Regionen zu überlassen. Bislang werden dazu dem Benutzer alle in dem Massenspeicher 4 verfügbaren Regionen über die Anzeigevorrichtung 2 zur Auswahl bereitgestellt und der Benutzer kann daraus auswählen, welche der Regionen in den internen Speicher 5 geladen werden sollen, um anschließend eine Routensuche anhand der eingegebenen Daten durchführen zu können. Da der Benutzer jedoch häufig die bestimmten Regionen, durch die die gewünschte Route führt bzw. Routen führen, bzw. deren genaue Bezeichnung nicht kennt, ist es sinnvoll, dem Benutzer die für die Routenermittlung bzw. Routennachverfolgung während einer Fahrt benötigten Regionen für eine Auswahl anzubieten.

Die vom Benutzer auswählbaren Regionen können beispielsweise Länder, Teile von Ländern (Bundesländer in Deutschland, Departments in Frankreich usw.) oder eine Zusammenfassung von mehreren Ländern sein. Alternativ können Regionen auch Gebietssegmente sein, die beliebig kombinierbar sind, wie z.B. ein rechteckiges Gebiet oder ein sechseckiges Gebiet, die miteinander kombiniert werden können, so dass ein in dem internen Speicher verfügbarer Kartenbereich auch unabhängig von politischen Ländergrenzen und dgl. zusammengestellt werden kann.

Bei dem hierin vorgeschlagenen Verfahren wird der Benutzer aufgefordert, eine Routeninformation einzugeben, die z.B. einen oder mehrere Startorte und/oder einen oder mehrere Zielorte sowie sonstige für die Routenermittlung notwendige Informationen, wie z.B. eine Information über bevorzugte Streckenarten und dergleichen, enthalten. Der Startort kann auch mit Hilfe einer Positionsbestimmungseinheit, z.B. eine GPS-Einheit (GPS: Global Positioning System) bereitgestellt werden. Der Massenspeicher 4 ist mit der Navigationseinheit 1 während des Bereitstellens der Routeninformation verbunden oder wird anschließend an diese angeschlossen.

Nach der Bereitstellung der Routeninformationen bestimmt die Navigationseinheit 1 mögliche Routen und die Regionen, durch die diese Routen führen. Die Routenbestimmung wird nach bereits aus dem Stand der Technik bekannten Verfahren durchgeführt, die hierin nicht weiter beschrieben werden. Die Regionenauswahl für den internen Speicher 5 wird vorgenommen, indem dem Benutzer nur die Regionen, durch die die bestimmten Routen tatsächlich führen, zur Auswahl angeboten werden und alternativ können zusätzlich Umgebungsregionen z.B. gemäß einer Korridorfunktion angeboten werden, die von der bestimmten Route bzw. den bestimmten Routen weniger als eine vorbestimmte Entfernung entfernt sind.

Dem Benutzer werden die vorgeschlagenen Regionen beispielsweise auf der Anzeigevorrichtung in geeigneter Weise angezeigt und der Benutzer kann daraus einzeln auswählen, welche der Regionen in den internen Speicher 5 geladen werden sollen. Selbstverständlich kann die Ausgabe auch auf andere Weise erfolgen, wie z.B. als Sprachausgabe. Alternativ oder zusätzlich kann der Benutzer auch durch eine entsprechende Eingabe angeben, dass alle vorgeschlagenen Regionen in den internen Speicher 5 geladen werden sollen. Ist die Datenmenge zum Speichern aller ausgewählten Regionen in den internen Speicher 5 zu groß, so kann vorgesehen werden, dass diese Option dem Benutzer nicht angezeigt wird. Weiterhin können in diesem Fall die Regionen, durch die die bestimmte Route bzw. die bestimmten Routen führen und die Regionen, die zu diesen benachbart sind, für den Benutzer auf der Anzeige durch eine unterschiedliche Darstellung kenntlich gemacht werden, z.B. durch in Farbe und Intensität verschiedene Darstellungen auf der Anzeigevorrichtung 2, so dass der Benutzer sofort erkennt, welche Regionen für die Routenbestimmung bzw. die Routenanzeige unbedingt notwendig sind und welche Regionen optional von der Navigationseinheit 1 entsprechend der Umgebungsregionen (Korridorregionen) empfohlen werden.

Nach der Auswahl des Benutzers wird die Auswahl bestätigt und die ausgewählten Regionen werden in dem internen Speicher 5 gespeichert. Nach Abschluss des Speicherns der Regionen kann der Massenspeicher 4 von der Navigationseinheit 1 getrennt werden; dieser steht dann für eine weitere Verwendung zur Verfügung.

Vorteile eines solchen Systems bestehen darin, dass der Benutzer, der eine manuelle Auswahl der in den internen Speicher 5 der Navigationseinheit 1 zu speichernden Navigationsdaten vornehmen möchte, keine Geografiekenntnisse für die Auswahl der benötigten Regionen benötigt, da die notwendigen Regionen dem Benutzer in geeigneter Weise angezeigt werden. Ferner kann der Benutzer vermeiden, dass für die Route nicht benötigte Regionen ausgewählt werden, so dass weiterer Speicherplatz nur für die wirklich benötigten Regionen bzw. Navigationsdaten zur Verfügung steht. So kann der Benutzer bei Anzeige der Umgebungsregionen zusätzlich zu den Routenregionen individuell angeben, welche Umgebungsregionen aus dem internen Speicher 5 abrufbar sein sollen und welche nicht. Dies hat gegenüber dem herkömmlichen Verfahren, bei dem die Umgebungsregionen gemäß einer Regel, z.B. einer Entfernung von der Hauptroute, der Anzahl der Abzweigungen ausgehend von der Hauptroute und dergleichen, automatisch in den internen Speicher 5 geladen werden, den Vorteil, dass der Benutzer gezielt nur diejenigen Umgebungsregionen auswählt, die möglicherweise während der Fahrt benötigt werden.

Darüber hinaus wird durch das beschriebene Verfahren ausgeschlossen, dass Umwegrouten durch die Navigationseinheit 1 aufgrund einer fehlerhaften Regionenauswahl durch den Benutzer ermittelt werden. Dies wäre der Fall, wenn z.B. ein Benutzer statt Österreich Frankreich als eine Durchgangsregion für die zu fahrende Route ausgewählt hätte. Dann würde die Navigationseinheit 1 als bestimmte Route auf dem Weg von Deutschland nach Italien über Frankreich geführt werden und damit eine weitaus längere Wegstrecke vorschlagen.

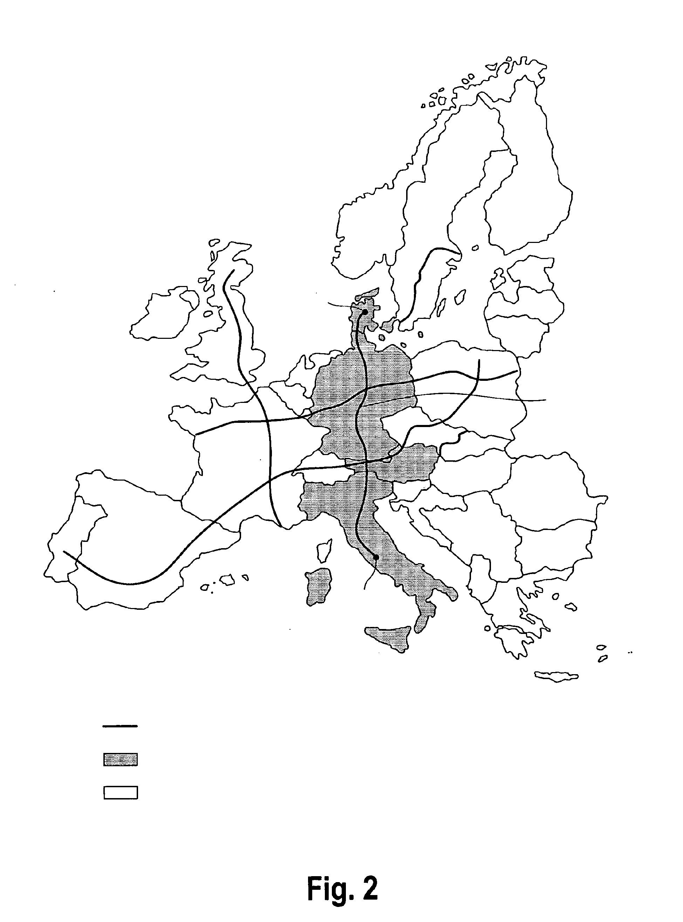

Die Ermittlung der Regionen kann auch unabhängig von den in dem Massenspeicher 4 gespeicherten Daten erfolgen. Dazu ist eine Information über ein ausgedehntes Straßennetz bereits in der Navigationseinheit 1 fest gespeichert, so dass bei einem bereitgestellten Startort und Zielort eine ungefähre Routensuche anhand eines ausgedünnten Straßennetzes (siehe Fig. 2) durchgeführt wird, mit der es möglich ist, die benötigten Regionen zu ermitteln, so dass der Benutzer explizit aufgefordert werden kann, den entsprechenden Massenspeicher 4 anzuschließen bzw. den entsprechenden Datenträger, auf dem die benötigten Regionen gespeichert sind, in das dafür vorgesehene Laufwerk des Massenspeichers 4 einzulegen, um die Navigationsdaten für die entsprechenden Regionen einzulesen.

Anstelle des ausgedünnten Straßennetzes und einer Routensuche darin, kann auch eine Matrix über größere Städte verwendet werden, die bei Fahrten von jeder Stadt zu jeder Stadt benötigten Regionen in Form einer Look-up-Tabelle enthält. Die so ermittelten Regionen können dann dem Benutzer zur Auswahl bereitgestellt werden oder automatisch in dem internen Speicher 5 gespeichert werden.

Zuvor in dem internen Speicher 5 gespeicherte Regionen werden nach der Auswahl des Benutzers zum Löschen angeboten, um Speicherplatz des internen Speichers 5 freizugeben. Alternativ kann das Löschen der nicht benötigten Regionen bzw. der nicht ausgewählten Regionen automatisch durch die Navigationseinheit 1 durchgeführt werden.

Gemäß einer Ausführungsform sind die Anzeigevorrichtung 2 und die Eingabevorrichtung 3 in Form eines Touchscreens ausgebildet. Die Auswahl der Regionen kann in diesem Fall durch Auswählen (Antippen) einer entsprechend farblich hervorgehobenen Region durch Berühren des entsprechenden Bereiches auf dem Touchscreen ausgewählt werden. Wenn nicht nur die Routenregionen, durch die die bestimmte Route bzw. die bestimmten Routen tatsächlich führen, sondern auch entsprechende im Umkreis befindliche Umgebungsregionen ausgewählt werden können, können die Routenregionen, die Umgebungsregionen sowie außerhalb der auswählen Regionen befindlichen Regionen jeweils visuell unterschiedlich auf dem Touchscreen angezeigt werden, wie es in Fig. 2 dargestellt ist, z.B. verschiedenfarbig, mit verschiedenen Schraffierungen, mit verschiedenen Helligkeiten usw. Auf diese Weise kann der Benutzer eindeutig erkennen, welche Regionen als für die Route erforderlich ausgewählt werden sollen. Ferner können als optionale Regionen Umgebungsregionen angezeigt werden, die ausgewählt werden können, z.B. wenn eine Unterbrechung einer Fahrt in einem Ort vorgesehen wird, der in einer zu einer Routenregion benachbarten oder sonstigen Region liegt.

Die optionalen Regionen können entsprechend einer von der Navigationseinheit 1 oder vom Benutzer bestimmten Umkreisangabe ausgewählt werden, wobei die Umkreisangabe angibt, bis zu welchem Abstand von der bestimmten Route bzw. von den bestimmten Routen eine Straßeninformation verfügbar sein soll. Die Umkreisangabe kann jedoch auch von der Navigationseinheit 1 automatisch entsprechend dem verfügbaren Speicherplatz des internen Speichers 5 angepasst werden. Wird festgestellt, dass der Speicherplatz des internen Speichers 5 zu gering ist, um alle notwendigen Routenregionen und die optionalen Umgebungsregionen zu speichern, so wird die Umkreisangabe schrittweise reduziert und die Umgebungsregionen entsprechend der reduzierten Umkreisangabe ermittelt. Lassen sich alle so ermittelten Umgebungsregionen in dem internen Speicher speichern, so werden sie dem Benutzer für eine Auswahl angezeigt. Auf diese Weise werden dem Benutzer nur eine Auswahl von Regionen zur Verfügung gestellt, die auch im Fall, dass der Benutzer alle der zur Verfügung gestellten Regionen auswählt, im internen Speicher 5 gespeichert werden können.

## Patentansprüche

1. Verfahren zum Betreiben einer Routenbereitstellungsvorrichtung mit einem internen Speicher (5) zum Speichern von Navigationsdaten, mit folgenden Schritten:
- Ermitteln einer oder mehrerer Routen abhängig von einer bereitgestellten Routeninformation gemäß einem Routenbestimmungsverfahren;
- Bestimmen von Routenregionen, durch die die eine oder mehreren ermittelten Routen führen;
- Ausgeben der Routenregionen zur Auswahl an einen Benutzer;
- Erhalten einer Auswahlinformation von dem Benutzer;
- Kopieren von Navigationsdaten, die den entsprechend der Auswahlinformation ausgewählten Regionen zugeordnet sind, von einem externen Speicher (4) in den internen Speicher (5) der Routenbereitstellungsvorrichtung.

2. Verfahren nach Anspruch 1, wobei weiterhin eine oder mehrere Umgebungsregionen ermittelt werden, die in einem bestimmten Umkreis um die ermittelten eine oder mehreren Routen liegen, wobei die eine oder mehreren Umgebungsregionen zur Auswahl an den Benutzer ausgegeben werden.

3. Verfahren nach Anspruch 2, wobei der bestimmte Umkreis abhängig von einem bereitgestellten Umkreiswert oder von einem verfügbaren Speicherplatz des internen Speichers (5) festgelegt wird.

4. Verfahren nach einem der Ansprüche 1 bis 3, wobei insbesondere dem Benutzer die auswählbaren Regionen als auswählbare Flächen, die die auswählbaren Regionen grafisch darstellen, und/oder als auswählbaren Text, der Regionenbezeichnungen angibt, bereitgestellt werden.

5. Verfahren nach Anspruch 4, wobei dem Benutzer weiterhin in der Auswahlinformation eine Auswahloption ausgegeben wird, durch die eine Auswahl aller bestimmten Routenregionen oder einer Gruppe eines Teils der der Routenregionen ermöglicht wird.

6. Verfahren nach einem der Ansprüche 1 bis 5, wobei in dem internen Speicher (5) befindliche Navigationsdaten, die nicht den bestimmten Routenregionen zugeordnet sind, vor dem Kopieren gelöscht werden.

7. Verfahren nach einem der Ansprüche 1 bis 6, wobei die eine oder die mehreren Routen abhängig von der bereitgestellten Routeninformation anhand von in der Routenbereitstellungsvorrichtung bereitgestellten Navigationsdaten ermittelt werden, wobei die bereitgestellten Navigationsdaten ein die Regionen übergreifendes ausgedünntes Wegstreckennetz beschreiben.

8. Routenbereitstellungsvorrichtung umfassend:
- eine Ausgabeeinrichtung (2);
- einen internen Speicher (5) zum Speichern von Navigationsdaten,
wobei die Routenbereitstellungsvorrichtung ausgebildet ist,
- um eine oder mehrere Routen abhängig von einer bereitgestellten Routeninformation gemäß einem Routenbestimmungsverfahren zu ermitteln,
- um Routenregionen, durch die die eine oder mehrere ermittelten Routen führen, zu bestimmen, und
- um die Routenregionen zur Auswahl an einen Benutzer auszugeben;
- um eine Auswahlinformation von dem Benutzer zu erhalten;
- um Navigationsdaten, die den entsprechend der Auswahlinformation ausgewählten Regionen zugeordnet sind, von einem verbundenen oder verbindbaren externen Speicher (4) in den internen Speicher (5) der Routenbereitstellungsvorrichtung zu kopieren.

9. Routenbereitstellungsvorrichtung nach Anspruch 8, bei der mit Hilfe einer Eingabeeinrichtung (3) und der Ausgabeeinrichtung (2) die Routenregionen zum Kopieren durch einen Benutzer auswählbar sind.

10. Routenbereitstellungsvorrichtung nach einem der Ansprüche 8 bis 9, wobei die Ausgabeeinrichtung (2) die auszuwählenden Routenregionen sowie alle übrigen verfügbaren Regionen in grafisch unterschiedlicher Darstellung ausgibt.

11. Computerprogramm, das einen Programmcode enthält, der, wenn er auf einer Datenverarbeitungseinheit ausgeführt wird, das Verfahren gemäß einem der Ansprüche 1 bis 7 ausführt.

## Claims

1. Method for operating a route-providing device having an internal memory (5) for storing navigation data, comprising the following steps:
- determining one or more routes as a function of provided route information in accordance with a route-determining method;
- determining route regions through which one or more identified routes lead;
- outputting the route regions for selection to a user;
- receiving selection information from the user;
- copying navigation data which is assigned to the regions selected in accordance with the selection information, from an external memory (4) into the internal memory (5) of the route-providing device.

2. Method according to Claim 1, wherein, in addition, one or more surrounding regions are identified which lie in a specific surrounding area around the identified one or more routes, wherein the one or more surrounding regions are output for selection to the user.

3. Method according to Claim 2, wherein the specific surrounding area is defined as a function of a provided surrounding area value or an available memory location of the internal memory (5).

4. Method according to one of Claims 1 to 3, wherein, in particular, the selectable regions are provided to the user as selectable areas which graphically represent selectable regions and/or as selectable text which indicates region designations.

5. Method according to Claim 4, wherein, in addition, in the selection information a selection option is output to the user which makes possible a selection of all the specific route regions or of a group of some of the route regions.

6. Method according to one of Claims 1 to 5, wherein, navigation data which is located in the internal memory (5) and is not assigned to the specific route regions is deleted before the copying process.

7. Method according to one of Claims 1 to 6, wherein the one or more routes are identified as a function of the provided route information on the basis of navigation data provided in the route-provision device, wherein the provided navigation data describes a sparse route network which covers the regions.

8. Route-providing device, comprising:
- an output device (2);
- an internal memory (5) for storing navigation data, wherein the route-providing device is designed,
- to identify one or more routes as a function of provided route information in accordance with a route-determining method,
- to determine route regions through which one or more identified routes lead, and
- to output the route regions for selection to a user;
- to receive selection information from the user;
- to copy navigation data, which is assigned to the regions selected in accordance with the selection information, from a connected or connectable external memory (4) into the internal memory (5) of the route-providing device.

9. Route-providing device according to Claim 8, in which, by means of an input device (3) and the output device (2), the route regions can be selected for copying by a user.

10. Route-providing device according to one of Claims 8 to 9, wherein the output device (2) outputs the route regions to be selected and all the other available regions in a graphically different representation.

11. Computer program which contains a program code which, when it is executed on a data processing unit, executes the method according to one of Claims 1 to 7.

## Revendications

1. Procédé d'utilisation d'un dispositif de préparation d'itinéraire qui présente une mémoire interne (5) qui sert à conserver des données de navigation, le procédé comportant les étapes suivantes :
détermination d'un ou de plusieurs itinéraires en fonction d'une information d'itinéraire préparée dans un procédé de détermination d'itinéraire,
détermination de régions d'itinéraire qui sont traversées par le ou les itinéraires déterminés,
présentation des régions d'itinéraire à un utilisateur pour lui permettre une sélection,
obtention d'une information de sélection en provenance de l'utilisateur et
copie de données de navigation qui sont associées aux régions sélectionnées par l'information de sélection, depuis une mémoire externe (4) jusque dans la mémoire interne (5) du dispositif de préparation d'itinéraire.

2. Procédé selon la revendication 1, dans lequel une ou plusieurs régions environnantes situées dans un environnement défini autour du ou des itinéraires déterminés sont en outre déterminées, la ou les régions environnantes étant présentées à l'utilisateur pour lui permettre une sélection.

3. Procédé selon la revendication 2, dans lequel l'environnement défini est défini en fonction d'une valeur d'environnement préparée ou d'un emplacement de mémoire disponible dans la mémoire interne (5).

4. Procédé selon l'une des revendications 1 à 3, dans lequel les régions aptes à être sélectionnées sont présentées à l'utilisateur en particulier sous la forme de surfaces aptes à être sélectionnées qui représentent les régions aptes à être sélectionnées graphiquement et/ou sous la forme d'un texte apte à être sélectionné qui indique les désignations des régions.

5. Procédé selon la revendication 4, dans lequel une option de sélection qui permet la sélection de toutes les régions d'itinéraire définies ou d'un groupe formé d'une partie des régions sélectionnées est en outre présentée à l'utilisateur dans l'information de sélection.

6. Procédé selon l'une des revendications 1 à 5, dans lequel des données de navigation situées dans la mémoire interne (5) et qui ne sont pas associées aux régions d'itinéraire déterminées sont effacées avant la copie.

7. Procédé selon l'une des revendications 1 à 6, dans lequel le ou les itinéraires sont déterminés à l'aide de données de navigation préparées dans le dispositif de préparation d'itinéraire en fonction de l'information d'itinéraire préparée, , les données de navigation préparées décrivant un réseau routier dilué qui couvre les régions.

8. Ensemble de préparation d'itinéraire comportant :
un dispositif de présentation (2),
une mémoire interne (5) qui conserve des données de navigation,
l'ensemble de préparation d'itinéraire étant configuré :
pour déterminer un ou plusieurs itinéraires en fonction d'une information d'itinéraire préparée par un procédé de détermination d'itinéraire,
pour déterminer des régions d'itinéraire traversées par le ou les itinéraires déterminés,
pour présenter les régions d'itinéraire à un utilisateur pour lui permettre une sélection,
pour obtenir une information de sélection de l'utilisateur et
pour copier dans la mémoire interne (5) de l'ensemble de préparation d'itinéraire et depuis une mémoire externe (4) reliée ou apte à être reliée des données de navigation qui sont associées aux régions sélectionnées dans l'information de sélection.

9. Ensemble de préparation d'itinéraire selon la revendication 8, dans lequel les régions d'itinéraire peuvent être sélectionnées par un utilisateur à l'aide d'un dispositif d'introduction (3) et du dispositif de présentation (2) pour être copiées.

10. Ensemble de préparation d'itinéraire selon l'une des revendications 8 à 9, dans lequel le dispositif de présentation (2) délivre dans une présentation graphique différente les régions d'itinéraire à sélectionner ainsi que toutes les autres régions disponibles.

11. Programme informatique qui contient un code de programme qui, lorsqu'il est exécuté sur une unité dé traitement de données, met en oeuvre le procédé selon l'une des revendications 1 à 7.
